# EUROPÄISCHE PATENTSCHRIFT

(11) **EP 3 105 030 B1**
(45) Veröffentlichungstag und Bekanntmachung des Hinweises auf die Patenterteilung: **02.05.2018**
(21) Anmeldenummer: 15706183.9
(22) Anmeldetag: 12.02.2015
(51) Int. Cl.: B29C 47/10, C08J 3/18, B29C 47/40, B29K 27/06

(54) **VERFAHREN ZUR HERSTELLUNG GEBRAUCHSFERTIGER WEICH-PVC-FOLIEN ODER PROFILE**
METHOD FOR PRODUCING READY TO USE SOFT PVC FILMS OR PROFILES
PROCÉDÉ DE FABRICATION DE FILMS OU DE PROFILÉS EN PVC SOUPLE

(30) Priorität: 13.02.2014 EP 14155077
(43) Veröffentlichungstag der Anmeldung: 21.12.2016
(73) Patentinhaber: Sika Technology AG, 6340 Baar (CH)
(72) Erfinder: WOLF, Ulrich, CH-7031 Laax (CH); FREI, Fabian, CH-8049 Zürich (CH)
(74) Vertreter: Sika Patent Attorneys
(86) Internationale Anmeldenummer: PCT/EP2015/053029
(87) Internationale Veröffentlichungsnummer: WO 2015/121386

(56) Entgegenhaltungen:
- DE-T2- 69 410 846
- Anonymous: "ZSK twin screw extruders. The benchmark for maximum throughput and highest product quality in modern processing technology.", , 31. Dezember 2011 (2011-12-31), Seiten 1-26, XP055131557, Stuttgart, Germany Gefunden im Internet: URL:http://www.schall-virtuell.de/sixcms/m edia.php/244/ZSK_gesamt_2011_englisch.pdf [gefunden am 2014-07-24]

## Beschreibung

### Technisches Gebiet

Die Erfindung betrifft die Herstellung von auf Polyvinylchlorid (PVC) basierenden Polymerzusammensetzungen.

### Stand der Technik

Die hohe Beständigkeit von PVC gegenüber Verbrennung sowie sein niedriger Preis und seine vorteilhaften Verarbeitungseigenschaften gehören zu den Hauptgründen, warum dieses Material heute eine der am meisten verwendeten Kunstoffsorten ist. Nach dem Stand der Technik muss PVC mit Stabilisatoren compoundiert werden, bevor es für die Herstellung von End- oder Halbfabrikaten verwendet werden kann, so zum Beispiel durch Formverfahren mittels Extrusion. Der Ausdruck "Compoundieren" bezieht sich auf einen gesonderten Verarbeitungsschritt, in dem Roh-PVC (d.h. das direkt aus der Polymerisation von Vinylchlorid erhältliche Produkt) unter Erwärmen mit stabilisierenden Additiven und gegebenenfalls Weichmachern, Füllstoffen und weiteren Additiven gemischt wird, um ein im Wesentlichen homogenes Material zu bilden. Dieses Material wird als Halbfabrikat, beispielsweise in Form von Pellets oder einem Granulat an den Endverarbeiter verkauft.

Das Compoundieren von PVC erfordert erhebliche Energiemengen und ist damit ein bedeutender Kostenfaktor bei der Verarbeitung von PVC. Allerdings sind bis heute nur wenige Verfahren beschrieben worden, in denen auf ein Compoundieren verzichtet werden kann. Lange ging man davon aus, dass das Compoundieren eine unbedingte Notwendigkeit der PVC-Herstellung darstellt, da befürchtet wurde, dass sich nicht compoundiertes PVC bei der Extrusion in erheblichem Ausmaß zersetzt.

PVC wird heute je nach Anwendung in Weich-PVC und Hart-PVC unterschieden. Aus Hart-PVC werden unter anderem Rohre und Profile, beispielsweise für Fenster hergestellt, während Weich-PVC, das einen signifikanten Anteil an Weichmacher enthält, häufig als Ummantelung von Kabeln eingesetzt wird. Weitere häufige Anwendungen von Weich-PVC finden sich in Fußbodenbelägen, Schläuchen, Schuhsohlen, Dachabdichtungen oder auch in Gummi-Handschuhen. Weich-PVC enthält, wie erwähnt, einen signifikanten Anteil an Weichmachern, der dem von Natur aus harten Werkstoff PVC plastische Eigenschaften, wie insbesondere eine wünschenswerte Nachgiebigkeit, verleiht. Die Weichmacher lagern sich bei der thermoplastischen Bearbeitung zwischen den Molekülketten des PVCs ein und lockern damit deren Gefüge.

Ein für Weich-PVC wichtiger Faktor ist die Gelierung des PVC-Materials. Diese hat entscheidende Auswirkungen auf dessen mechanische Eigenschaften sowie dessen Schweißbarkeit. Die Gelierung beginnt typischerweise bei Temperaturen über 130 °C in Anwesenheit von PVC und Weichmachern und ist in der Regel bei Temperaturen um über 190°C abgeschlossen, bei denen ein Gelierungsgrad von 100% erreicht wird. So nehmen beispielsweise die Zugfestigkeit und Bruchdehnung mit zunehmendem Gelierungsgrad zu. Für technisch verwendbare PVC-Produkte ist ein Gelierungsgrad im Bereich von 10 bis 50% ungünstig, da dies zu relativ schlechten mechanischen Eigenschaften führt, die sich für die meisten Anwendungen nicht eignen. Ein Gelierungsgrad im Bereich von 60% und mehr liefert hingegen mechanische Eigenschaften, die als brauchbar angesehen werden. Andererseits darf der Gelierungsgrad nicht zu hoch sein. So verbessern sich zwar die mechanischen Eigenschaften bei Gelierungsgraden von über 95% weiterhin, der hohe Gelierungsgrad führt aber zu Problemen mit der Schweißbarkeit des Materials. So ist PVC mit einem Gelierungsgrad von über 100% nicht mehr schweißbar, d.h., eine Bearbeitung kann nur noch bei Temperaturen erfolgen, die zu einer thermischen Beschädigung und einem Abbau des Materials führen.

Die Gelierung hängt von der Verarbeitungstemperatur und der Zeit, die das Material dieser Temperatur ausgesetzt ist, ab. Der wesentliche Faktor ist hier die Temperatur. Zu beachten ist zudem, dass die Gelierung nicht reversibel ist. Der Gelierungsgrad von PVC wird somit wesentlich von der höchsten Temperatur während der Verarbeitung des Materials bestimmt. Normale Weich-PVC-Materialien werden gewöhnlich bei einer Temperatur zwischen 170 und 190° verarbeitet, was zu einem Gelierungsgrad im Bereich von 70 bis 100%, und einer guten Balance von mechanischen Eigenschaften und Schweißbarkeit führt.

Heutzutage werden Weich-PVC Produkte in der Regel über Zwischenstufen, beispielsweise mittels "Dry Blend" (d.h., einer speziellen Mischung von PVC-Pulver) oder durch die Verwendung von vorcompoundierten PVC Pellets, hergestellt. Eine weitere Route ist das sogenannte "Direct Compounding " was im Folgenden näher erläutert werden soll:

### Herstellung von PVC-"Dry Blends":

In diesem Verfahren werden PVC, Additive, Verarbeitungshilfsstoffe, Füllstoffe und Weichmacher in einem Hochgeschwindigkeitsmischer auf Temperaturen von etwa 100 bis 120°C erhitzt. Gemäß diesem Verfahren wird ein homogenes, trockenes und mehr oder weniger fließfähiges Pulver erhalten. Das Endprodukt ist auf dieser Stufe nicht geliert (Gelierungsgrad etwa 0%) und wird als Zwischenprodukt für die folgenden Verfahren A und B eingesetzt.

### A) Herstellung von gelierten Pellets

Dazu wird das "Dry Blend"-Produkt in einen Extruder gegeben, unter Bildung einer homogenen Schmelze erhitzt und dann zu einem Granulat oder Pellets gleichmäßiger Größe geformt. Während des Erhitzens liegt die Temperatur in der Regel zwischen 140 und 160°C, so dass ein Gelierungsgrad von unter 100% erreicht wird. Die hergestellten Pellets werden anschließend in einen zweiten Extruder gegeben, erhitzt und in eine flache Bahn oder ein Profil geformt.

### B) Verarbeitung des Dry-Blends

Das Dry Blend-Material wird in einen Extruder gegeben, unter Schmelzen auf 170 bis 190°C erhitzt und durch eine Düse zur Herstellung einer flachen Bahn oder eine Profildüse unter Ausbildung eines Profils gedrückt.

Im Rahmen des "Direct Compounding" entfällt die Zwischenstufe des Herstellens eines PVC-Dry Blends. Stattdessen werden die Rohmaterialien in einem Schritt in einen Einlass eines gleichläufig rotierenden Doppelschnecken- oder Planetenrollenextruders eingebracht. Dabei wird das Gemisch aus PVC, Additiven, Füllstoffen und Weichmachern zusammen erhitzt. Das Verfahren weist jedoch den Nachteil auf, dass die Verweilzeit in den beschriebenen Extrudern oft nur gering ist (≤ 30 Sekunden), was zu einem relativ niedrigen Gelierungsgrad von unter 50% nach dem "Direkt-Compounding" führt. Dies hat zur Folge, dass das Produkt nicht direkt zu Membranen oder Profilen weiterverarbeitet werden kann. Das extrudierte Material wird daher in einen Kalanderblock überführt, der die Verweilzeit auf etwa 2 bis 5 Minuten erhöht und mit dem sich ein Gelierungsgrad von 70 bis 90% einstellen lässt. Die Kalander-Technologie ermöglicht eine Erhöhung der Verweilzeit ("Residence Time"), was mit Hilfe eines Extruders normalerweise nicht möglich ist. Mit einem Extruder liegt die Verweilzeit nur bei 30 Sekunden bis 2 Minuten, was sich mit einem Kalander auf bis zu 15 Minuten (abhängig von dessen Größe und Durchsatz) steigern lässt. Bei Verlassen des Kalanderblocks wird das Material noch entgast, um Blasen in der fertigen Membran zu vermeiden. Ein Nachteil des Direct Compounding besteht allerdings darin, dass sich mit Hilfe dieses Verfahrens keine Profile herstellen lassen.

Den vorbeschriebenen Verfahren ist gemein, dass durch das teilweise mehrfache Erhitzen und Abkühlen ein relativ hoher Energieaufwand erforderlich ist, um die gewünschten Eigenschaften insbesondere in Bezug auf die Bruchdehnung und Zugfestigkeit einzustellen. So ist allein für die Herstellung des Dry Blends ein Energieeintrag, gemessen anhand des SEI-Werts (Specific Energy Input), von zwischen 0,05 und 0,10 kW*h/kg erforderlich. Die Weiterverarbeitung des hergestellten Dry Blends erfordert einen weiteren Energieeintrag im Bereich von 0,10 bis 0,40 kW*h/kg, so dass in der Gesamtbilanz ein Energieeintrag im Bereich von mindestens 0,15 kW*h/kg erforderlich ist.

In der DE 694 10 846 T2 ist ein Verfahren zur direkten Herstellung von compoundiertem PVC mit Hilfe eines Extruders beschrieben, bei dem zugesetzte Bestandteile wie Stabilisierungsmittel, Füllstoffe und gegebenenfalls Weichmacher, innerhalb des Extrusionsprozesses mit dem PVC vermischt werden, und das PVC anschließend direkt zu Bahnen extrudiert werden kann. Das in dieser Anmeldung beschriebene Verfahren sieht vor, dass flüssiger Weichmacher und ein mineralischer Füllstoff in das PVC-Material eingemischt werden. Dabei wird der Füllstoff zu einem relativ frühen Zeitpunkt, d.h. vor der Zugabe wesentlicher Anteile des Weichmachers zum PVC-Material, zugesetzt. Dieses Verfahren liefert aber ein Weich-PVC, das relativ ungünstige mechanische Eigenschaften, wie insbesondere eine unvorteilhafte Zugfestigkeit und Bruchdehnung, aufweist.

Ziel und Aufgabe der vorliegenden Erfindung war es demzufolge die Nachteile des Standes der Technik zu überwinden und ein Verfahren zur Verfügung zu stellen, das unter möglichst geringem Energieaufwand ein Weich-PVC-Material mit günstigen mechanischen Eigenschaften insbesondere in Bezug auf eine Zugfestigkeit und Bruchdehnung und optional einen Gelierungsgrad, der ein späteres Verschweißen der Zusammensetzung ermöglicht, liefert. Darüber hinaus soll sich das Weich-PVC einfach und schnell herstellen lassen, wobei möglichst nur ein einziger Verarbeitungsschritt erforderlich sein soll. Zudem soll das Verfahren flexibel genug sein, damit sich damit verschiedene PVC-Produkte, wie flache Bahnen, Platten, Profile, etc. herstellen lassen. Schließlich soll der für dieses Verfahren erforderliche Energieeintrag möglichst gering sein, um die Wirtschaftlichkeit gegenüber den heute verfügbaren Verfahren zu verbessern.

Erfindungsgemäß wurde gefunden, dass dieses Ziel mit einem Verfahren zur Extrusion einer homogenen Polymerzusammensetzung, die einen Gelierungsgrad von 60 bis 100%, eine Bruchdehnung von mindestens 200 % und eine Zugfestigkeit von mindestens 10 N/mm 2 aufweist, aus einem nicht compoundierten Polyvinylchlorid,dadurch gekennzeichnet, dass innerhalb des Verfahrens eine Energiemenge, angegeben durch den spezifischen Energieeintrag (SEI), von 0.03 bis 0.20 kWh/kg, insbesondere 0.04 bis 0.16 kWh/kg in die Polymerzusammensetzung eingetragen wird, wobei die Polymerzusamsetzung besteht aus
(A) 30 bis 80 Gew.-% durch Suspensionpolymerisation hergestelltes Polyvinylchlorid,
(B) 0,5 - 5 Gew.-% eines stabilisierenden Additivs,
(C) 0 - 40 Gew.-% eines festen Bestandteils, und
(D) 5 - 40 Gew.-% eines bei Raumtemperatur flüssigen Weichmachers für das Polyvinylchlorid,
wobei sich die Angaben in Gew.-% jeweils auf das Gesamtgewicht der Polymerzusammensetzung beziehen, mit einer Extrusionsvorrichtung mit mindestens einem Rotor, der mindestens drei Knet- und/oder Mischzonen aufweist und in der Lage ist, die Mischung sowohl zu transportierten als auch zu mischen, in die Polyvinylchlorid (A) in nicht compoundierter Form eingespeist wird, und wobei das Verfahren die Schritte
(II) Einspeisen des Polyvinylchlorids (A) und von stabilisierendem Additiv (B) in die Extrusionsvorrichtung durch einen ersten Einlass, der in der Nähe der Antriebseinheit und neben einem ersten fördernden Segmentabschnitt des mindestens einen Rotors angeordnet ist;
(III) Einspeisen des Weichmachers zum mit dem stabilisierenden Additiv vermischten Polyvinylchlorid durch mindestens zwei voneinander beabstandete Einlasse, wobei der Weichmacher in mindestens zwei Portionen von jeweils 30-70 Gew-%, bezogen auf das Gesamtgewicht des Weichmachers, zum Polyvinylchlorid zugegeben wird, und zwischen der Zugabe der einzelnen Portionen eine Knet- und/oder Mischzone angeordnet ist,
(IV) Bearbeiten des Weichmacher/Polyvinylchlorid Gemischs bei einer Temperatur bei oder oberhalb der Glasübergangstemperatur des Polyvinylchlorids, wobei die Temperatur des Gemischs 150°C nicht übersteigt bis der Weichmacher im Wesentlichen vollständig in das Polyvinylchlorid eingearbeitet wurde.
(V) gegebenenfalls Einspeisen des festen Bestandteils zum mit dem Weichmacher vermischten Polyvinylchlorid in einem Abschnitt, an dem mindestens 80 Gew.-% der Gesamtmenge des Weichmachers in das Polyvinylchlorid eingearbeitet wurden,
(VI) gegebenenfalls Entgasen und Extrudieren der Mischung durch die Extrusionsdüse, umfasst.

Unter "nicht-compoundiertem Polyvinylchlorid" ist im Rahmen der vorliegenden Erfindung Roh-PVC (d.h. das direkt aus der Polymerisation von Vinylchlorid erhältliche Produkt) zu verstehen. Dieses kann zwar beispielsweise mit einem stabilisierenden Additiv physikalisch vermischt sein, es wird aber im Gegensatz zu compoundiertem Polyvinylchlorid nicht thermisch behandelt, um die Aufnahme von beispielsweise stabilisierendem Additiv oder Weichmacher zu ermöglichen.
"Homogene Polymerzusammensetzungen" umfassen im Rahmen der Erfindung Zusammensetzungen, in denen die Einzelbestandteile im Wesentlichen homogen verteilt sind. Dem Fachmann ist ohne weiteres klar, dass sich in Polymerzusammensetzungen Bereiche bilden können, die einen geringfügig höheren Anteil eines Bestandteils aufweisen als andere Bereiche, und dass eine 100 %ig homogene Verteilung aller Bestandteile in der Regel nicht erreicht werden kann. Auch solche Zusammensetzungen mit "nicht perferkter" Verteilung sollen aber vom Begriff "homogene Polymerzusammensetzun" gemäß der vorliegenden Erfindung erfasst sein.

Die Zugfestigkeit und Bruchdehnung bestimmt sich im Rahmen der vorliegenden Erfindung gemäß der DIN EN 12311-2; Verfahren B. Der Gelierungsgrad bestimmt sich im Rahmen der vorliegenden Erfindung mit Hilfe eines DSC 821e (Mettler-Toledo) nach der Methode von Potente H. Determination ofthe Degree of Gelation of PVC with DSC, Kunststoff-German Plastics, 1987, 77 (4), S. 401-404. Dazu wurde pro Messung 10 mg geschnittenes Material mit einer Heizrate von 20°C/min von 25 auf 220°C aufgeheizt. Der Anteil des bei tieferen Temperaturen auftretenden Schmelzendotherms zur Summe beider Schmelzendotherme wird dann als "Gelierungsgrad" in Prozent angegeben. Zu diesem Bestimmungsverfahren ist anzumerken, dass sich damit nur Gelierungsgrade von bis zu 100 % bestimmen lassen. Von einer Übergelierung (Gelierungsgrad > 100%) spricht man in Fällen, in denen das PVC über etwa 185 °C erhitzt wurde (beispielsweise für mehr als 1 min bei 195°C). Bei diesen Temperaturen nimmt die Reißfestigkeit des Materials zwar weiter zu, es kommt aber zu einer Abnahme der Reißdehnung. Zudem macht sich eine Übergelierung dadurch bemerkbar, dass das Material nicht mehr verschweissbar ist.

Das erfindungsgemäße Verfahren lässt sich beispielsweise realisieren, indem die Zugabe des Weichmachers zum PVC in zwei Portionen erfolgt, die zeitlich versetzt zueinander zugegeben werden, und indem, gegebenenfalls mit Ausnahme von das PVC stabilisierenden Additiven, feste Bestandteile, wie Füllstoffe, Farbstoffe oder Farbpigmente, erst zu einem Zeitpunkt zu dem PVC gegeben werden, an dem der wesentliche Anteil des Weichmacher dem PVC zugegeben und von diesem aufgenommen wurde.

Ein wichtiges Merkmal dieser Ausführungsform der vorliegenden Erfindung ist es demzufolge, dass feste Bestandteile erst zu einem Zeitpunkt in das Polyvinylchlorid eingemischt werden, an dem zumindest ein Großteil des Weichmachers mit dem Polyvinylchlorid vermischt und von diesem absorbiert wurde. Überraschend wurde gefunden, dass diese Verfahrensführung zu einer wesentlichen Verbesserung der mechanischen Eigenschaften, wie insbesondere der Zugfestigkeit und Bruchdehnung, und zu einer Verbesserung der thermischen Reststabilität führt.

Die mit dem erfindungsgemäßen Verfahren hergestellten PVC-Produkte weisen bevorzugt eine thermische Reststabilität von mindestens 60 Minuten, insbesondere von mindestens 90 Minuten und besonders bevorzugt von mindestens 100 Minuten auf. Unter der thermischen Reststabilität versteht man die Zeitspanne, innerhalb der das Weich-PVC-Compound bei einer Temperatur von 180°C noch keine Zersetzung unter Abspaltung von HCl zeigt. Die thermische Reststabilität ist damit ein Maß für die Stabilität des Materials unter thermischer Belastung, und wurde anhand der DIN 53 381-1 bestimmt.

Die Bestandteile A und B können im Schritt (II) in nicht vermischter Form dem Extruder zugeführt werden. Aus Gründen der Zweckmäßigkeit können die Komponenten A und B jedoch auch vor der Zugabe in den Extruder ohne Wärmezufuhr miteinander vermischt werden, was nur einen marginalen Einfluss auf die gesamte Energiebilanz des Verfahrens hat. In diesem Fall ist die Komponente (B) bevorzugt ein bei 25 °C festes Material. Bei einem bei 25 °C flüssigen Stabilisator würde sich bei Mischung mit dem PVC auf den PVC-Partikeln eine Beschichtung mit dem Additiv bilden, was die Partikel klebrig macht. Dies kann zu Problemen bei der weiteren Verarbeitung des Materials führen.

Alternativ ist es möglich, wenn auch weniger bevorzugt, das stabilisierende Additiv zu einem späteren Zeitpunkt zuzugeben, beispielsweise zusammen mit dem Weichmacher im Schritt (III) zum PVC zu geben. In diesem Fall ist das stabilisierende Additiv vorzugsweise flüssig.

Die in Schritt (IV) erwähnte Glasübergangstemperatur (Tg) sowie sämtliche Glasübergangstemperaturen sind im Rahmen der vorliegenden Erfindung mit Hilfe von DSC (Differential Scanning Calorimetry) zu bestimmen.

In einer Ausführungsform ist die Angabe "im Wesentlichen vollständig" im Schritt (IV) so aufzufassen, dass keine getrennten Phasen von Weichmacher und Polyviniylchlorid zu beobachten sind und ein homogenes Gemisch vorliegt. An welchem Punkt dies in einem Extruder der Fall ist, lässt sich beispielsweise durch Probenentnahme feststellen.

In einer bevorzugten Ausführungsform betrifft das erfindungsgemäße Verfahren die Herstellung einer Polymerzusammensetzung, die im Wesentlichen besteht aus
(A) 30 bis 80 Gew.-% Polyvinylchlorid,
(B) 0,5 - 5 Gew.-% eines stabilisierenden Additivs,
(C) 0 - 40 Gew.-% eines festen Bestandteils, und
(D) 5 - 40 Gew.-% eines bei Raumtemperatur flüssigen Weichmachers für das Polyvinylchlorid,
wobei sich die Angaben in Gew.-% jeweils auf das Gesamtgewicht der Polymerzusammensetzung beziehen, mit einer Extrusionsvorrichtung mit mindestens einem Rotor, der mindestens drei Knet- und/oder Mischzonen aufweist und in der Lage ist, die Mischung sowohl zu transportierten als auch zu mischen, in die Polyvinylchlorid (A) in nicht compoundierter Form eingespeist wird, und
wobei das Verfahren die Schritte
(II) Einspeisen des Polyvinylchlorids (A) und stabilisierendem Additiv (B) in die Extrusionsvorrichtung durch einen ersten Einlass, der in der Nähe der Antriebseinheit und neben einem ersten fördernden Segmentabschnitt des mindestens einen Rotors angeordnet ist;
(II) Einspeisen des Weichmachers zum mit dem stabilisierenden Additiv vermischten Polyvinylchlorid durch mindestens zwei voneinander beabstandete Einlasse, wobei der Weichmacher in mindestens zwei Portionen von jeweils etwa 20-80 Gew-%, bezogen auf das Gesamtgewicht des Weichmachers, zum Polyvinylchlorid zugegeben wird, und zwischen der Zugabe der einzelnen Portionen eine Knet- und/oder Mischzone angeordnet ist,
(III) Bearbeiten des Weichmacher/Polyvinylchlorid Gemischs bei einer Temperatur um oder oberhalb der Glasübergangstemperatur des Polyvinylchlorids, wobei die Temperatur des Gemischs 150°C nicht übersteigt bis der Weichmacher im Wesentlichen vollständig in das Polyvinylchlorid eingearbeitet wurde.
(IV) gegebenenfalls Einspeisen des festen Bestandteils (D) zum mit dem Weichmacher vermischten Polyvinylchlorid in einem Abschnitt, an dem mindestens 80 Gew.-% der Gesamtmenge des Weichmachers in das Polyvinylchlorid eingearbeitet wurden,
(V) gegebenenfalls Entgasen und Extrudieren der Mischung durch die Extrusionsdüse,
umfasst.

Für die Schritte (I), (II) und (III) gelten die vorstehend für die Schritte (II), (III) und (IV) gemachten Angaben analog.

Als Ausgangsmaterial (A) für die Polymerzusammensetzung kann jedes übliche, nicht-compoundierte, zur Herstellung von compoundiertem PVC geeignete Polyvinylchlorid verwendet werden. Nicht-compoundiertes PVC ist ein kommerzielles, teilchenförmiges Erzeugnis und kann von verschiedenen Herstellern bezogen werden. Der Ausdruck "teilchenförmig" bezieht sich auf jede feste Form von PVC, wobei pulverförmige, kompaktierte, partikelförmige und granulierte Formen, wie zum Beispiel Pellets oder Perlen, eingeschlossen sind. Die unteren und oberen Grenzen von 30 und 80 Gew.-% gelten insoweit als kritisch, als dass bei weniger als etwa 30 Gew.-% polymerem PVC die Qualität des Endprodukts nicht akzeptabel wäre, während ein Anteil von über 80 Gew.-% zu einem Weichmacheranteil führen würde, der für die Herstellung von weichem PVC nicht ausreichend ist. Efindungsgemäß handelt es sich bei dem in das Verfahren einzubeziehenden Polyvinylchlorid um durch Suspensionspolymerisation hergestelltes Polyvinylchlorid (auch als S-PVC bezeichnet). Gegenüber Polyvinylchlorid, dass durch Suspensionspolymerisation hergestellt wurde, ist es bei Polyvinylchlorid, dass durch Emulsionspolymerisation hergestellt wurde (auch als E-PVC bezeichnet), schwieriger, Produkte mit geeigneten Eigenschaften herzustellen. Demzufolge ist das in das Verfahren einzubeziehende Polyvinylchlorid vorzugsweise kein E-PVC.

Als PVC-stabilisierendes Additiv (B) können im erfindungsgemäßen Verfahren kommerziell erhältliche, geeignete und bekannte Zusammensetzungen oder Mischungen verwendet werden. Ein Minimum von etwa 0,5 Gew.-% gilt als kritisch, da unter diesem Wert kommerzielle stabilisierende Additive oder Mischungen solcher Additive keine ausreichend langzeit stabilisierende Wirkung vermitteln. Bei mehr als 5 Gew.-% der Gesamtzusammensetzung stellen sich hingegen keine zusätzlichen stabilisierenden Vorteile ein, während andere Produkteigenschaften wie z.B. Optik und Mechanik leiden können. Bevorzugte stabilisierende Additive sind anorganische Schwermetallsalze, Metallseifen, insbesondere von Barium, Blei, Zink oder Calcium, sowie Dibutylzinn- und Dioctylzinnverbindungen und epoxidiertes Sojaöl. Besonders bevorzugt sind Kalzium/Zink-Stabilisatoren oder Barium/Zink-Stabilisatoren, die dem Fachmann ohne Weiteres geläufig sind. Das stabilisierende Additiv kann bei 25 °C flüssig oder fest sein, wobei fest bevorzugt ist.

Neben PVC und einem stabilisierenden Additiv enthalten die erfindungsgemäß zu verarbeitenden Polymerzusammensetzungen vorzugsweise 0 bis 40 Gew.-%, besonders bevorzugt 0,01 bis 35 Gew.-%, und am meisten bevorzugt etwa 0,3 bis 30 Gew.-% eines festen Bestandteils (C). Ein fester Bestandteil ist im Rahmen der Erfindung dadurch charakterisiert, dass er sich im PVC nicht löst, sondern einen partikulären Bestandteil bildet. Zu solchen festen Bestandteilen zählen insbesondere Füllstoffe, Farbstoffe und Farbpigmente. Bevorzugt umfasst der feste Bestandteil Füllstoffe, insbesondere mineralische Füllstoffe, und gegebenenfalls Farbpigmente. Im Zusammenhang mit der vorliegenden Erfindung besonders geeignete Füllstoffe sind Kaolin und Calciumcarbonat. Besonders bevorzugte Farbpigmente sind Russ und Titandioxid.

Ein weiterer wichtiger Bestandteil der Polymerzusammensetzungen, die gemäß dem hier geschilderten Verfahren herstellbar sind, ist ein flüssiger Weichmacher (D). Der Gehalt des flüssigen Weichmachers in der Polymerzusammensetzung liegt zweckmäßig bei etwa 5 bis 40 Gew.-%, insbesondere bei etwa 15 bis 40 Gew.-% und besonders bevorzugt bei etwa 20 bis 40 Gew.-%. Ein ganz besonders bevorzugter Weichmacheranteil liegt bei 30 bis 35 Gew.-%. Wie dem Fachmann geläufig ist, ist die Menge des in das Polyvinylchlorid eingebrachten Weichmachers abhängig von den beabsichtigten Anwendungseigenschaften. So ist ein geringerer Anteil an Weichmacher für die Herstellung eines relativ festen PVCs ausreichend, während für die Herstellung von weichen Polyvinylchloriden, insbesondere solchen, die anschließend schweißbar sind, ein höherer Anteil von Weichmacher erforderlich ist.

Im Zusammenhang mit Polyvinylchlorid geeigneten Weichmacher sind insbesondere flüssige Weichmacher wie hochsiedende Ester einer Säure, bevorzugt von Terephthalsäure oder Adipinsäure und ein oder mehreren Alkoholen, wie Butanol oder Alkanolen mit 8 bis 12 Kohlenstoffatomen. Besonders geeignete Weichmacher sind im Rahmen der vorliegenden Erfindung Dioctylphthalat (DOP), Diisononylphthalat (DINP), Diisodecylphthalat (DIDP) und Dioctyladipat (DOA).

Wie bereits vorstehend angemerkt besteht die PVC-Zusammensetzung im Wesentlichen aus den Bestandteilen (A) bis (D). "Im Wesentlichen" ist jedoch so zu verstehen, dass die Zusammensetzung nicht notwendig ausschliesslich aus diesen Bestandteilen besteht, sondern daneben noch geringe Anteile an zusätzlichen Bestandteilen, wie übliche PVC-Zusätze, insbesondere in Form von Flammhemmern, Gleitmitteln, UV-Absorbern, Treibmitteln, Haftvermittlern, Antistatika, Fungizide oder Schlagzähigkeitsmodifikatoren, enthalten kann. Es ist auch möglich, eine geringe Menge eines zweiten Polymerbestandteiles, wie z.B. ein PVC-kompatibles (z.B. halogeniertes) auf Polyethylen oder Acrylsäure basierendes Polymer, beizumischen. In so einem Fall wird dieser Bestandteil zusammen mit dem teilchenförmigen PVC erneut ohne signifikantes Vormischen in den Hohlraum eingespeist. Es ist jedoch bevorzugt, wenn diese Bestandteile zusammen nicht mehr als etwa 10 Gew.-%, insbesondere nicht mehr als etwa 8 Gew.-% und besonders bevorzugt nicht mehr als etwa 5 Gew.-% bezogen auf das Gesamtgewicht der PVC-Zusammensetzung ausmachen.

Eine für die erfindungsgemäßen Verfahren besonders geeignete Vorrichtung ist eine Extrusionsvorrichtung, die ein Paar von im Wesentlichen isomorphen, länglichen Rotoren, die in den Hohlraum passen und zur interpenetrierenden Bewegung nebeneinander angeordnet sind, aufweist. Ein Paar bezeichnet die Anzahl "zwei". Eine solche Extrusionsvorrichtung wird auch als Doppelschneckenextruder bezeichnet. Eine besonders bevorzugte Extrusionsvorrichtung ist ein gleichsinnig drehender dichtkämmender Doppelschneckenextruder.

Die Rotoren sind "interpenetrierend" in dem Sinne, dass ein Vorsprung an einem der Rotoren an einem gegebenen Ort der Längs- und Drehposition mit einer Aussparung am anderen Rotor in der entsprechenden Lage zusammenwirkt, so dass im allgemeinen der Abstand zwischen den Rotoren an jedem Punkt zwischen ihnen längs der Länge des Hohlraums im Wesentlichen konstant bleibt. Die Verwendung von Rotoren mit sowohl fördernden als auch knetenden und/oder mischenden Teilabschnitten ist an sich bekannt und wird in der EP 0 426 619 näher erläutert. Zu den knetenden und oder mischenden Teilabschnitten ist anzumerken, dass im Bereich der Extrudertechnologie keine scharfe Abgrenzung zwischen solchen Abschnitten existiert, da ein Mischen immer auch einen Anteil an Kneten und ein Kneten immer auch einen Anteil an Mischen beinhaltet. Aus diesem Grund werden die Ausdrücke "kneten" und "mischen" in der vorliegenden Anmeldung synonym verwendet.

Der in den erfindungsgemäßen Verfahren verwendete mindestens eine Rotor, bevorzugt mehrere Rotoren, bilden vorzugsweise (i) einen ersten fördernden Segmentabschnitt neben dem mit dem Antrieb der Extrusionsvorrichtung verbundenen Ende des Rotors/der Rotoren; (ii) einen ersten mischenden Abschnitt stromabwärts von und neben dem ersten fördernden Segmentabschnitt; (iii) einen zweiten fördernden Segmentabschnitt stromabwärts von und neben dem ersten mischenden Segmentabschnitt; (iv) einen zweiten mischenden Segmentabschnitt stromabwärts von und neben dem zweiten fördernden Segmentabschnitt; (v) einen dritten fördernden Abschnitt stromabwärts von und neben dem zweiten mischenden Segmentabschnitt. Außerdem haben die Rotoren vorzugsweise (vi) einen dritten mischenden Segmentabschnitt stromabwärts von und neben dem dritten fördernden Segmentabschnitt und (vii) einen vierten fördernden Segmentabschnitt stromabwärts von und neben dem dritten mischenden Segmentabschnitt.

Der hier verwendete Begriff "stromabwärts" bezieht sich auf einen Ort längs der Länge des Rotors, der näher am Extrusionende der Extrusionsvorrichtung liegt, als der in Verbindung mit dem Ausdruck "stromabwärts" erwähnte Bezugsort.

Der vierte fördernde Segmentabschnitt ist im Allgemeinen neben dem Extrusionsende der Extrusionsvorrichtung angeordnet, d.h. dem Ende, das mit einer Extrusionsdüse üblicher, von der Form des zu erzeugenden Produktes abhängiger Bauweise bestückt ist. Zur Erzeugung des nötigen Druckes kann es, vor allem bei größeren Anlagen, sinnvoll sein eine Schmelzepumpe zwischen dem Extruder und der Extrusionsdüse einzubauen um ein Überhitzen des Polymers zu verhindern.

Für einen Doppelschneckenextruder ist es bevorzugt, wenn jeder der Rotoren eine Länge L im Bereich des 32 bis 60-fachen, bevorzugt des 36 bis 52-fachen seines Durchmessers D aufweist. Für ein Verfahren unter Verwendung eines Doppelschnecken-Extruders ist es weiterhin bevorzugt, wenn eine erste Portion Weichmacher bei einem L/D-Verhältnis im Bereich von 1 bis 8 und eine zweite Portion Weichmacher bei einem L/D-Verhältnis von etwa 10 bis 20 zugegeben wird. Das L/D Verhältnis ist hierbei ein Mass für die Position, bezogen auf die Gesamtlänge des Rotors, an dem die Zugabe erfolgen soll.

Die erfindungsgemäßen Verfahren sind nicht auf die Verwendung von Doppelschneckenextrudern beschränkt. Die Verfahren können ebenso gut mit anderen Extrusionsvorrichtung, wie beispielsweise einem Planetenwalzenextruder, einem Ringextruder, einem Mehrwellenextruder oder einem Buss-Kneter, durchgeführt werden. Bei Verwendung dieser Extrusionsvorrichtungen ist die Geometrie der Zugabe insbesondere des Weichmachers entsprechend anzupassen.

Für das erfindungsgemäße Verfahren gemäß der ersten beschriebenen Alternative ist es, wie vorstehend bereits erläutert, zweckmäßig, dass ein möglichst großer Anteil des Weichmachers in das Polyvinylchlorid eingearbeitet wurde, bevor ein fester Bestandteil, wie beispielsweise ein Füllstoff der Mischung zugegeben wird. So ist es besonders bevorzugt, wenn der feste Bestandteil, bevorzugt sämtliche festen Bestandteile, erst zu einem Zeitpunkt zum mit dem Weichmacher vermischten Polyvinylchlorid zugegeben werden, an dem mindestens 90 Gew.-%, bevorzugt mindestens 95 Gew.-% und insbesondere mindestens 99 Gew.-% des Weichmachers in das Polyvinylchlorid eingeknetet wurden. Weiterhin ist es bevorzugt, wenn dem Polyvinylchlorid im Schritt (V) mindestens 80 Gew.-%, bevorzugt mindestens 95 Gew.-%, und besonders bevorzugt mindestens 99 Gew.-% der Gesamtmenge der festen Bestandteile, d.h., der in die Zusammensetzung einzubeziehenden, gegebenenfalls mineralischen Füllstoffe, Pigmente und Farbstoffe, zugegeben wird. Am meisten bevorzugt ist es, wenn sämtliche festen Bestandteile erst dann mit dem PVC vermischt werden, wenn der Weichmacher vollständig in das Polyvinylchlorid eingearbeitet wurde. Entsprechendes gilt für Schritt (IV) gemäß der zweien beschriebenen Alternative.

Für die erfindungsgemäßen Verfahren ist es weiterhin bevorzugt, wenn die Temperatur des Weichmachers für das Vermischen mit dem Polyvinylchlorid auf mindestens 30° C unter der Glasübergangstemperatur (Tg) des Polyvinylchlorids (d.h. T ≥ (Tg - 30°C)), bevorzugt mindestens 15°C unterhalb der Tg des Polyvinylchlorids und besonders bevorzugt auf die Tg oder oberhalb der Tg des Polyvinylchlorids, eingestellt wird. Als Tg von Polyvinylchlorid ist zweckmäßig ein Wert von 80 °C anzusetzen, was der Glasübergangstemperatur von reinem Polyvinylchlorid entspricht. Ursache hierfür ist, dass der Weichmacher im Bereich ab bzw. oberhalb der Glasübergangstemperatur des Polyvinylchlorids besonders gut von diesem aufgenommen wird, und dass das Polyvinylchlorid im Bereich seiner Übergangstemperatur ausreichend erweicht ist, so dass es sich gut mit dem Weichmacher vermischen kann. Die Mittel mit denen diese Temperatur erreicht wird, sind für die Erfindung aber nicht entscheidend. So kann die Temperatur beispielsweise durch Erhitzen des Weichmachers vor dem Einspeisen, durch Wärmetauscher erfolgen. Ebenso ist es möglich, das PVC durch Verwendung von Schüttgutwärmetauschern vorzuheizen.

Im Zusammenhang mit der vorliegenden Erfindung hat es sich als zweckmäßig herausgestellt, wenn die durch die Extrusionsvorrichtung eingebrachte Energiemenge sowohl in Form mechanischer Energie (durch die Schnecke) als auch in Form von thermischer Energie, bevorzugt durch Heizelemente, bereitgestellt wird. In diesem Fall kann das PVC bei Raumtemperatur dosiert werden, während der Weichmacher bevorzugt auf eine Temperatur oberhalb, aber nicht zwingend, der Glasübergangstemperatur vorgewärmt wird.

Weist die Extrusionsvorrichtung Heizelemente auf, so ist es bevorzugt, wenn diese auf eine Temperatur von mindestens 130°C, bevorzugt mindestens 140°C eingestellt werden. Andererseits sollte die Temperatur der Heizelemente nicht zu hoch sein, damit die Gelierung des Produkts einen Wert von 100 % nicht übersteigt, was negative Auswirkungen auf die Schweißbarkeit des Produkts hätte. Vorzugsweise beträgt die Temperatur der Heizelemente daher nicht mehr als 200°C, insbesondere nicht mehr als 195°C.

Andererseits ist es im Rahmen der vorliegenden Erfindung bevorzugt, wenn die Temperatur für das Vermischen von Polyvinylchlorid und dem Weichmacher nicht so weit über der Glasübergangstemperatur des Polyvinylchlorids liegt, damit es zu keiner vorzeitigen Gelierung des Polyvinylchlorids kommt. So ist es bevorzugt, wenn die Temperatur beim Vermischen des Weichmachers mit dem Polyvinylchlorid, insbesondere für das Einmischen der ersten Portion des Weichmachers bei vorzugsweise nicht mehr als 50°C über der Glasübergangstemperatur des Polyvinylchlorids, bevorzugt nicht mehr als 40°C oberhalb der Glasübergangstemperatur des Polyvinylchlorids, und besonders bevorzugt nicht mehr als 35°C oberhalb des Tg des Polyvinylchlorids liegt. Eine Zudosierung von Weichmacher mit Temperaturen unterhalb der Tg des PVC's ist ebenfalls möglich.

Wie im Vorstehenden bereits erläutert wurde, ist es für die Verfahren gemäß der vorliegenden Erfindung sehr vorteilhaft, wenn der Weichmacher in mindestens zwei Portionen zum Polyvinylchlorid zugegeben wird. Ursache hierfür ist es, dass beobachtet wurde, dass bei einer Zugabe von zu großen Mengen an Weichmachern keine sinnvolle Vermischung des Weichmachers und des Polyvinylchlorids möglich ist, da der Weichmacher nicht schnell genug durch das Polyvinylchlorid aufgenommen werden kann. Im Zusammenhang mit dem Schritt (III), in dem das Einmischen des Weichmachers in das Polyvinylchlorid beschrieben wird, ist es demzufolge bevorzugt, wenn die einzelnen Weichmacherportionen für das Einspeisen zum mit dem stabilisierenden Additiv vermischten Polyvinylchlorid etwa 30 bis 70 Gew.-%, bevorzugt etwa 40 bis 60 Gew.-%, bezogen auf das Gesamtgewicht des Weichmachers, ausmachen. Im Zusammenhang mit der vorliegenden Erfindung hat es sich als besonders günstig erwiesen, wenn die zuerst zugegebene Weichmacherportion etwa 55 ± 3 Gew.-%, und die danach zugegebene Weichmacherportion etwa 45 ± 3 Gew.-% der Menge des Weichmachers ausmacht. Andererseits kann es auch sinnvoll sein, die zuerst zugegebene Weichmacherportion größer anzusetzen, so dass sie mehr als etwa 60 Gew.-% bis zu 80 Gew.-% und bevorzugt etwa 64 bis 76 Gew.-%, bezogen auf das Gesamtgewicht des Weichmachers, beträgt. Die zweite Weichmacherportion entspricht in diesem Fall dem zu 100 Gew.-% fehlenden Anteil.

Unabhängig von den vorstehenden Angaben ist es vorteilhaft, wenn der Anteil des Weichmachers, bezogen auf die Gesamtzusammensetzung, der als erste Weichmacherportion zugegeben wird im Bereich von 10 bis 30 Gew.-%, insbesondere 15 bis 25 Gew.-% und besonders bevorzugt 18 bis 21 Gew.-% liegt. Alternativ dazu kann es auch sinnvoll sein, den Anteil des Weichmachers, bezogen auf die Gesamtzusammensetzung, der als erste Weichmacherportion zugegeben wird mit mehr als 20 Gew.-% anzusetzen, wobei dieser Anteil 27 Gew.-% nicht übersteigen sollte. Im Rahmen dieser Verfahrensführung ist es bevorzugt, wenn der Anteil des Weichmachers, bezogen auf die Gesamtzusammensetzung, der als erste Weichmacherportion zugegeben wird im Bereich von 20,1 Gew.-% bis 26 Gew.-% und besonders bevorzugt im Bereich von 21 Gew.-% bis 25 Gew.-% liegt. Innerhalb der durchgeführten Experimente wurde festgestellt, dass sich durch eine entsprechende Verfahrensführung die mechanischen Eigenschaften, insbesondere die Zugfestigkeit und Bruchdehnung, sowie die thermische Reststabilität positiv beeinflussen lassen.

Für die Misch- und/oder Knetzone, die die PVC-Zusammenssetzung nach der ersten Zugabe des Weichmachers durchläuft, ist es weiterhin zweckmäßig, wenn diese so ausgelegt ist, dass der Weichmacher so mit dem Polyvinylchlorid vermischt werden kann, dass eine homogene Mischung gebildet wird, bevor eine zweite Portion Weichmacher zugegeben wird.

In Bezug auf den festen Bestandteil, insbesondere den Füllstoff, wurde vorstehend bereits angegeben, dass es sinnvoll ist, einen möglichst großen Anteil des festen Bestandteils, insbesondere des Füllstoffs, erst dann zum Polyvinylchlorid zuzugeben, wenn der Weichmacher im Wesentlichen vollständig in das Polyvinylchlorid eingearbeitet wurde. In diesem Zusammenhang ist es am meisten bevorzugt, wenn der feste Bestandteil, insbesondere der Füllstoff, erst dann in das Polyvinylchlorid eingearbeitet wird, nachdem der Weichmacher im Wesentlichen vollständig, d.h., zu mindestens 90 Gew.-%, bevorzugt zu mindestens 95 Gew.-%, und am meisten bevorzugt zu mindestens 99 Gew.-%, in das Polyvinylchlorid eingearbeitet wurde. Die vorstehenden Gewichtsangaben beziehen sich auf das Gewicht der Phase des Weichmachers und der separaten Phase des gegebenenfalls den Weichmacher enthaltenden PVC's.

Zum Erzeugen einer Gelierung bzw. eines Gelierungsgrads im Bereich von 60 bis 100% ist es am Ende des vorstehend geschilderten Verfahrens zweckmäßig, dass das Polyvinylchlorid vor der Extrusion durch die Extrusionsdüse auf eine Produkttemperatur von mindestens etwa 150°C bis maximal etwa 195°C, bevorzugt etwa 155 bis 190°C, und besonders bevorzugt etwa 160 bis etwa 185°C erhitzt wird. In diesem Temperaturbereich stellt sich, abhängig von der Zeit, die die PVC-Zusammensetzung dieser Temperatur ausgesetzt wird, der gewünschte Gelierungsgrad ein. In Bezug auf diese Temperaturen ist es jedoch bevorzugt, wenn die Zusammensetzung diesen Temperaturen erst dann ausgesetzt wird, wenn der Weichmacher im Wesentlichen vollständig, d.h. zu mindestens 95 Gew.-% bezogen auf die Gesamtmenge des Weichmachers, in das Polyvinylchlorid eingearbeitet wurde. Der Fachmann kann dem Vorstehenden entnehmen, dass der Gelierungsgrad vom Produkt der Temperatur und der Zeit abhängt, und ist ohne weiteres in der Lage, die Temperaturführung in der Extrusionsvorrichtung auf den beabsichtigten Gelierungsgrad abzustimmen.

In einer besonders bevorzugten Ausführungsform wird das erfindungsgemäße Verfahren auf einem gleichsinnig-rotierenden Doppelschneckenextruder mit einer Länge L von etwa dem 44-fachen seines Durchmessers D durchgeführt, wobei sich das Verfahren wie folgt gestaltet:
(i) Einspeisen von S-PVC und des stabilisierenden Additivs in eine Mischzone bei einem L/D-Verhältnis von 0 bis 4.
(ii) Zudosieren von flüssigem Weichmacher, wobei dieser eine Temperatur zwischen 20 und 120°C, vorzugsweise 60 bis 110°C, aufweist, bei einem L/D-Verhältnis von 4 bis 8.
(iii) Mischen und Verkneten des PVCs mit dem Weichmacher bei einem L/D-Verhältnis von 6 bis 16.
(iv) Zudosieren von flüssigem Weichmacher bei einer Temperatur des Weichmachers zwischen 20 und 160°C, vorzugsweise 60 bis 140°C, bei einem L/D-Verhältnis von 14 bis 20.
(v) Mischen und Verkneten des PVCs mit dem Weichmacher bei einem L/D-Verhältnis von 16 bis 24.
(vi) Zugabe von festen Bestandteilen, insbesondere Füllstoffen und Pigmenten, bevorzugt über eine Seitenzuführung, bei einem L/D-Verhältnis von 20 bis 28.
(vii) Dispergieren der festen Bestandteile und weiteres Erhitzen der PVC-Weichmachermischung bei einem L/D-Verhältnis von 24 bis 34.
(viii) Entgasen der Mischung unter Vakuum zur Bildung eines blasenfreien Produkts bei einem L/D-Verhältnis von 32 bis 36.
(ix) Aufbau von Druck für eine Extrusion der verarbeiteten Zusammensetzung bei einem L/D-Verhältnis von 36 bis 44.

Für grössere Verarbeitungsmaschinen ist der Einsatz einer Schmelzepumpe besonders vorteilhaft.

Eine bevorzugte Anwendung des erfindungsgemäßen Verfahrens ist die kontinuierliche Herstellung von Folien und/oder Profilen, insbesondere von Folienbahnen. Neben der Verwendung von nicht compoundiertem PVC und Einspeisen der Bestandteile der finalen PVC-Zusammensetzung in den Hohlraum in der erläuterten Weise, kann solch eine Folienherstellung etablierte Folienproduktionsverfahren zum Vorbild nehmen, und z.B. eine Schlitzdüse für die Extrusion endloser Bahnen verwenden.

Eine Anlage zur kontinuierlichen Herstellung von Platten durch Extrusion einer PVC-Zusammensetzung ohne die Verwendung oder Herstellung von compoundiertem PVC-Material gemäß der Erfindung, wie oben dargestellt, umfasst einen oben beschriebenen ko-rotierenden Extruder, einen Antrieb für den Rotor, und eine Schlitzdüse, die nach dem Extrusionsende des Hohlraumes zur Herstellung kontinuierlicher Bahnen der extrudierten Zusammensetzung angeordnet ist. Solch eine Anlage wird im allgemeinen auch geeignete Behälter und Mittel zur kontinuierlichen Einspeisung abgemessener Mengen der Bestandteile (A) und (B) in den ersten Einlass ohne wesentliches Vormischen und zur angetriebenen Einspeisung abgemessener Mengen der Bestandteile (C) und (D) in den zweiten und jeglichen weiteren Einlass umfassen.

Im Folgenden wird die vorliegende Erfindung anhand einiger Beispiele näher erläutert, die sich jedoch in keiner Weise eingrenzend auf den Schutzumfang der Anmeldung auswirken sollen.

### Vergleichsbeispiele 1 bis 5: Dry-Blend und Extruder-Verfahren gemäß dem Stand der Technik

PVC kann in der Regel nicht ohne Weichmacher verarbeitet werden, ohne dass es zum thermischen Abbau des PVCs und damit zur Entstehung von Chlorwasserstoffsäure kommt. In einem ersten Schritt gemäß dem Verfahren zur Herstellung von "Dry Blends" gemäß dem Stand der Technik werden PVC, Weichmacher, Additive und Füllstoffe in eine einfache, mit hoher Geschwindigkeit betriebene Mischvorrichtung gegeben, die in der Lage ist, die Mischung durch Reibung zu erhitzen. Die Zusammensetzung besteht dazu aus 56 % eines Vorgemischs aus S-PVC und stabilisierenden Additiven, 35 % Weichmacher, und 9% Füllstoffen und Pigmenten. Mit Hilfe der Mischvorrichtung wird die Mischung auf 110 bis 120°C erhitzt und im Mischer behandelt, bis sich ein trockenes, frei fließendes Pulver gebildet hat. Innerhalb dieses Schrittes erfolgt die Migration des Weichmachers in das PVC Korn. Wichtig ist, dass hier die Weichmachermigration vollständig abgeschlossen ist. Eine unvollständige Migration verhindert bei der Verarbeitung das Erreichen guter mechanischer Werte. Der spezifische Energie-Eintrag (SEI; specific energy input), der für diesen Schritt erforderlich ist, beträgt zwischen 0,05 und 0,10 kWh/kg für die beschriebenen Dry Blends.

Nach dieser Behandlung wird das erhaltene Dry Blend in eine Kühlvorrichtung überführt und auf eine Temperatur von kleiner 40 °C abgekühlt.
Das so erhaltene Dry Blend wird anschließend einer Extrusionsvorrichtung zugeführt und durch Reibung oder Konvektion aufgeheizt, bis eine homogene und verarbeitbare Schmelze erhalten wird. Dies ist normalerweise bei Temperaturen von 160 bis 195°C der Fall. Die Schmelze wird dann entgast und extrudiert. Für diesen Zweck wurden gängige Extrusionsvorrichtungen, wie ein Einschneckenextruder (Vergleichsbeispiel 1), ein gegenläufig rotierender Doppelschneckenextruder (Vergleichsbeispiel 2), ein gleichsinnig rotierender Doppelschneckenextruder (Vergleichsbeispiel 3), ein Buss-Kneter (Vergleichsbeispiel 4) und ein Planetenrollenextruder (Vergleichsbeispiel 5) eingesetzt. In diesem Verarbeitungsschritt ist ein SEI von etwa 0,1 bis 0,25 kWh/kg erforderlich. Insgesamt sind für die Herstellung der Dry Blends daher SEI-Werte von 0,15 bis 0,30 kWh/kg nötig. Die Ergebnisse der hierzu durchgeführter Untersuchungen sind in der folgenden Tabelle 1 angegeben.

Die Zugfestigkeiten und Bruchdehnungen in Tabelle 1 und in den folgenden Beispielen wurden gemäß der DIN EN 12311-2; Verfahren B bestimmt. Der Gelierungsgrad wurde mit Hilfe eines DSC 821e (Mettler-Toledo) nach der Methode von Potente H. Determination of the Degree of Gelation of PVC with DSC, Kunststoff-German Plastics, 1987, 77 (4), S. 401-404. Dazu wurde pro Messung 10 mg geschnittenes Material mit einer Heizrate von 20°C/min von 25 auf 220°C aufgeheizt. Der Anteil des bei tieferen Temperaturen auftretenden Schmelzendotherms zur Summe beider Schmelzendotherme wird dann als "Gelierungsgrad" in Prozent angegeben.

**Tabelle 1**

| Vergleichsbeispiel | Verarbeitungvorrichtung | Gesamt SEI | Mechanische Eigenschaften | | Gelierungsgrad [%] |
|---|---|---|---|---|---|
| | | | Zugfestigkeit [N/mm²] | Bruchdehnung [%] | |
| 1 | EinschneckenExtruder | 0,26 | 19 | 350 | 85 |
| 2 | Gegensinnig rotierender Doppelschneckenextruder | 0,15 | 20 | 350 | 85 |
| 3 | Gleichsinnig rotierender Doppelschneckenextruder | 0,16 | 19 | 350 | 90 |
| 4 | Buss-Kneter | 0,15 | 19 | 350 | 90 |
| 5 | Planetenrollenextruder | 0,14 | 20 | 350 | 85 |

Tabelle 1 lässt sich entnehmen, dass mit den verfügbaren Verfahren Weich-PVC Produkte mit geeigneten Eigenschaften hergestellt werden können. Durch die Zwischenstufe der Herstellung eines Dry-Blend ist hierzu aber ein Gesamtenergie-Eintrag (SEI) von mindestens 0,14 kWh/kg erforderlich.

### Beispiele 1 bis 22:

In den erfindungsgemäßen Beispielen wurden die Bestandteile kontinuierlich und während der gesamten Durchführung des Experiments gemäß ihren entsprechenden Verhältnissen zugeführt. Zur Vereinfachung der Versuche wurden jedoch das PVC sowie die stabilisierenden Additive kalt vorgemischt. Die separate Zugabe der Additive ist ohne weiteres durch Anpassung der Extrusionsvorrichtung möglich.

Zusätzlich zu den in den Vergleichsbeispielen bestimmten mechanischen Parametern wurde für die nach dem erfindungsgemäßen Verfahren hergestellten PVC-Produkte auch die thermischen Reststabilität bestimmt. Hierzu wurde auf die DIN 53 381-1 zurückgegriffen, wobei die Messungen bei 180 °C durchgeführt wurden.

### Beispiel 1:

Der Zuführabschnitt wurde mit Wasser gekühlt, um ein Verstopfen zu verhindern. Alle Zylindertemperaturen wurden auf eine Temperatur von 140°C eingestellt. Die Schneckengeschwindigkeit wurde auf 160 Umdrehungen pro Minute eingestellt. Der Durchsatz betrug 15 kg/h. Als Extruder wurde ein corotierender Doppelschneckenextruder der Firma Berstorff ZE25A UT mit einem L/D-Verhältnis von 44 eingesetzt.

100% des mit dem stabilisierenden Additiv vermischten PVCs wurden im Zuführabschnitt des Extruders zugeführt. Dann wurden 58 Gew.-% des Phthalatweichmachers bei einer Temperatur von 80°C bei einem L/D-Verhältnis von 6 "stromabwärts" des Zuführbereichs für das PVC zugeführt. Die Mischung wurde dann gemischt, geknetet und weiter aufgeheizt. Anschließend wurden 42 Gew.-% des Phthalatweichmachers bei einem L/D-Verhältnis von 16 stromabwärts des Zuführbereichs zugegeben. Die PVC-Weichmachermischung wurde weiter gemischt, geknetet und aufgeheizt.

Stromabwärts zu der Mischung von PVC und Weichmacher wurden Füllstoffe und Pigmente bei einem L/D-Verhältnis von 24 zugeführt. Die Füllstoffe und Pigmente wurden durch Mischen und Kneten in das PVC eingearbeitet. Die fertige Mischung wurde dann durch Anlegen eines Vakuums von 100 mbar Absolutdruck bei einem L/D-Verhältnis von 36 stromabwärts des Zuführabschnitts entgast. Die letzten Abschnitte des Extruders sind zum Aufbau von Druck für die flache Extrusionsdüse ausgelegt. Die derart produzierbare Probe wies einen SEI von nur 0,057 kWh/kg, eine Bruchdehnung von 320% und eine Zugfestigkeit von 15,5 N/mm² auf. Die erhaltene Probe war schweißbar.

### Beispiel 2

Die Durchführung von Beispiel 2 erfolgte analog Beispiel 1 mit dem Unterschied, dass die Schneckengeschwindigkeit des Extruders auf 100 U/min eingestellt wurde. Das derart produzierte Produkt hatte einen SEI von 0,05 kWh/kg, eine Bruchdehnung von 350% und eine Zugfestigkeit von 20 N/mm².

### Beispiel 3

Beispiel 3 wurde analog Beispiel 1 durchgeführt, mit dem Unterscheid, dass die Umdrehungsgeschwindigkeit der Schnecke auf 330 U/min eingestellt wurde. Das erhaltene Produkt hatte einen SEI von nur 0,092 kWh/kg, eine Bruchdehnung von 350% und eine Zugfestigkeit von 19 N/mm². Das erhaltene Produkt war allerdings nicht schweißbar.

### Beispiel 4

Beispiel 4 wurde analog Beispiel 1 durchgeführt, mit den Unterschieden, dass die Schneckengeschwindigkeit auf 320 U/min eingestellt und der Durchsatz auf 30 kg/h erhöht wurde. Das entsprechend hergestellte Produkt wies einen SEI von 0,06 kWh/kg, eine Bruchdehnung von 370% und eine Zugfestigkeit von 16,5 N/mm² auf. Das Produkt war schweißbar.

### Beispiel 5

Beispiel 5 wurde analog Beispiel 1 durchgeführt, mit den Unterschieden, dass die Schneckengeschwindigkeit auf 310 U/min eingestellt, der Durchsatz auf 30 kg/h erhöht und kein Füllstoff zugegeben wurde. Das derart hergestellte Produkt wies einen SEI von nur 0,082 kWh/kg, eine Bruchdehnung von 350% und eine Zugfestigkeit von 20 N/mm² auf. Die Probe war schweißbar.

### Beispiel 6 und 7

Beispiel 6 wurde analog Beispiel 1 durchgeführt, mit den Unterschieden, dass die Schneckengeschwindigkeit des Extruders auf 210 U/min eingestellt, der Durchsatz auf 18 kg/h eingestellt und dass die Füllstoffe und Pigmente bei dem L/D-Verhältnis von 1 zugegeben wurden. Das mit Hilfe dieses Verfahrens erhaltene Produkt wies einen SEI von 0,060 kWh/kg, eine Bruchdehnung von 338% und eine Zugfestigkeit von 15,1 N/mm² auf. Das Produkt war schweißbar.

Beispiel 7 wurde analog Beispiel 6 durchgeführt, mit dem Unterschied, dass die Füllstoffe und Pigmente erst bei einem L/D-Verhältnis von 20 zugegeben wurden. Ein nach diesem Verfahren produziertes Produkt wies einen SEI von 0,060 kWh/kg, eine Bruchdehnung von 350% und eine Zugfestigkeit von 19 N/mm² auf. Das Produkt war ebenfalls schweißbar.

Ein wesentlicher Unterschied zwischen den Produkten aus Beispiel 6 und 7 besteht in der thermischen Reststabilität, die von 110 min auf 94 min reduziert ist. Ein Verfahren, bei dem die Füllstoffe vor dem Weichmacher in das PVC dispergiert werden, resultiert daher in einer höheren Endtemperatur in Vergleich zu einem Verfahren, bei dem die Füllstoffe erst zu einem späteren Zeitpunkt zugegeben werden. Die mechanischen Eigenschaften von Beispiel 6 sind ebenfalls ungünstiger als bei Beispiel 7.

### Beispiele 8 bis 11

Die Beispiele 8 bis 11 wurden unter Modifizierung der Einspeisetemperatur des Weichmachers in einem Temperaturbereich von 20 bis 125°C variiert. Die sonstigen Prozessparameter entsprechen denen aus Beispiel 7. Alle hergestellten Produkte wiesen einen SEI im Bereich von 0,06 bis 0,065 kWh/kg, eine Bruchdehnung von etwa 350% und eine Zugfestigkeit von etwa 19 N/mm² auf. Die hergestellten Proben waren jeweils schweißbar. Die Erhöhung der Temperatur des Weichmachers führte zu einer Reduzierung der erforderlichen Motorenkraft des Extruders und demzufolge zu einem reduzierten SEI durch den Extrudermotor.

### Beispiel 12

Beispiel 12 wurde mit dem Beispiel 7 entsprechenden Verfahrensparametern durchgeführt. Allerdings war die Menge der Füllstoffe und Pigmente im Vergleich zu Beispiel 7 von etwa 18 Gew.-% auf etwa 9 Gew.-% reduziert und anstelle von S-PVC wurde E-PVC verwendet. Beispiel 12 lieferte bei einem SEI von 0,067 kWh/kg jedoch kein Produkt mit verwertbaren Eigenschaften in Bezug auf die Bruchdehnung und Zugfestigkeit. Es wird angenommen, dass dies auf die sehr feine Struktur von E-PVC zurückzuführen ist (Partikelgröße etwa 1 µm). Beispiel 12 wird als Vergleichsbeispiel präsentiert.

### Beispiele 13 bis 15

Diese Beispiele wurde ebenfalls analog Beispiel 7 durchgeführt, wobei allerdings im Gegensatz zu Beispiel 7 keine Füllstoffe und Pigmente zugesetzt wurden und das Verhältnis der Zugabe von Phthalatweichmacher in der ersten Portion zur Zugabe des Weichmachers in der zweiten Position variiert wurde. Das Verhältnis der ersten Weichmacherportion zur zweiten Weichmacherportion betrug in Beispiel 13 31 zu 69, Beispiel 14 64 zu 36 und Beispiel 15 75 zu 25. Beispiel 15 wird als Vergleichsbeispiel präsentiert.

Die entsprechend diesem Verfahren hergestellten Produkte wiesen einen SEI von 0,135 kWh/kg, eine Bruchdehnung im Bereich von 320 bis 380% sowie eine Zugfestigkeit im Bereich 20 bis 22 N/mm² auf. Die hergestellten Produkte waren jeweils schweißbar. Es wurde festgestellt, dass durch Zudosierung eines höheren Anteils von Weichmacher bei einem L/D-Verhältnis von 6 das hergestellte Material besser vor Überhitzung im ersten Mischabschnitt geschützt wird. Dies hat einen positiven Einfluss auf die Haltbarkeit des fertigen Produkts. Durch Zugabe einer höheren Menge an Weichmacher bei einem L/D-Verhältnis von 6 verschlechterten sich in Beispiel 15 die mechanischen Eigenschaften. Als bestes Verhältnis für die Weichmacherzugabe wurden 58 Gew.-% und 42 Gew.-% bei Zugabe bei einem L/D-Verhältnis von 6 bzw. 16 festgestellt.

### Beispiele 16 bis 18

Diese Beispiele wurden analog Beispiel 1 durchgeführt, wobei allerdings die Temperatur der Zylinder auf 120 °C (Beispiel 16), 140 °C (Beispiel 17) und 160 °C (Beispiel 18) eingestellt, der Weichmacher auf 80°C vorerhitzt und die Schneckengeschwindingkeit auf 180 U/min eingestellt wurde. Die Änderung der Temperatur in den Zylindern hat eine direkte Auswirkung auf die PVC-Temperatur am Ende des Extrusionsprozesses. Die hergestellten Produkte wiesen verwendbare mechanische Eigenschaften auf, wenn eine Produkttemperatur (T(max)) von mehr als 160°C erreicht wurde (Beispiel 18). Temperaturen unter diesem Wert lieferten hingegen deutlich ungünstigere mechanische Eigenschaften (Beispiele 16 und 17). Die Beispiele 16 und 17 werde als Vergleichsbeispiele präsentiert.

### Beispiele 19 bis 22

In diesen Beispielen wurde der Einfluss der Schneckengeschwindigkeit auf die erhaltenen Produkte untersucht. Die Verfahrensparameter dieser Untersuchungen entsprechen denen der Beispiele 8 bis 11, mit den Unterschieden, dass die Temperatur der Weichmachers 80 °C betrug und die Schneckengeschwindigkeit im Bereich von 210 bis 420 U/min variiert wurde. Die Veränderung der Schneckengeschwindigkeit hat direkte Auswirkungen auf die PVC-Temperatur am Ende des Extrusionsprozesses und den SEI. Produkte, die eine Schmelzentemperatur (T(max)) von 160°C erreichten, erzielten verwendbare mechanische Eigenschaften. Beim Überschreiten einer Schmelzentemperatur von 195°C verschlechtert sich allerdings die Schweißbarkeit der Produkte. Beispiel 19 wird als Vergleichsbeispiel präsentiert.

Die Zusammensetzungen, Parameter und Ergebnisse der Untersuchung der vorbeschriebenen Beispiele sind in der folgenden Tabelle 2 dargestellt.

**Tabelle 2**

| Beispiel | PVC [kg] | Plast. 1 [kg/h] | Plast. 2 [kg/h] | Plast. Temperatur [°C] | Füllstoffe & Pigmente | Schneckengeschwindigk. [U/min] | Energie Verbrauch [kW] | T(max) [°C] | SEI [kWh/kg] | Mechanische Eigenschaften | | Gelierungsgrad [%] | Thermische Reststabilität [min] |
|---|---|---|---|---|---|---|---|---|---|---|---|---|---|
| | | | | | | | | | | Zugfestigkeit [N/mm²] | Bruchdehnung [%] | | |
| 1 | 8,47 | 3,00 | 2,21 | 80 | 1,32 | 160 | 1,1 | 184 | 0,057 | 15,5 | 320 | 90 | 110 |
| 2 | 8,47 | 3,00 | 2,21 | 80 | 1,32 | 100 | 0.9 | 180 | 0,050 | 20 | 350 | 85 | 110 |
| 3 | 8,47 | 3,00 | 2,21 | 80 | 1,32 | 330 | 1,9 | 191 | 0,092 | 19 | 350 | 90 | 110 |
| 4 | 16,94 | 6,00 | 4,40 | 80 | 2,63 | 320 | 2,3 | 189 | 0,060 | 16,5 | 370 | 95 | 110 |
| 5 | 10,63 | 4,14 | 3,23 | 80 | 0,00 | 310 | 2,2 | 184 | 0,082 | 20 | 350 | 85 | 110 |
| 6 | 8.92 | 3,60 | 2,70 | 80 | 3.27@1 L/D | 210 | 1,4 | 174 | 0,060 | 15,1 | 338 | 85 | 94 |
| 7 | 8.92 | 3,60 | 2,70 | 80 | 3.27@20 L/D | 210 | 1,4 | 173 | 0,060 | 19,0 | 350 | 95 | 110 |
| 8 | 10.17 | 3,60 | 2,70 | 20 | 1,58 | 210 | 1,5 | 176 | 0,065 | 19,0 | 352 | 95 | 110 |
| 9 | 10.17 | 3,60 | 2,70 | 50 | 1,58 | 210 | 1,5 | 177 | 0,065 | 19,0 | 350 | 95 | 110 |
| 10 | 10.17 | 3,60 | 2,70 | 100 | 1,58 | 210 | 1,4 | 178 | 0,060 | 19,0 | 350 | 95 | 110 |
| 11 | 10.17 | 3,60 | 2,70 | 125 | 1,58 | 210 | 1,4 | 180 | 0,060 | 18,7 | 348 | 95 | 110 |
| 12 | 10.17 | 3,60 | 2,70 | 80 | 1,58 | 210 | 1,2 | 180 | 0,067 | n.a. | n.a | n.a. | 62 |
| 13 | 11,60 | 2,00 | 4,40 | 80 | 0,00 | 210 | 2,80 | 196 | 0,135 | 21 | 345 | 95 | 100 |
| 14 | 11,60 | 4,10 | 2,30 | 80 | 0,00 | 210 | 2,80 | 196 | 0,135 | 22 | 380 | 95 | 110 |
| 15 | 11,60 | 4,80 | 1,60 | 80 | 0,00 | 210 | 2,75 | 195 | 0,135 | 20 | 320 | 95 | 140 |
| 16 | 8,47 | 3,0 | 2,21 | 80 | 1,32 | 180 | 1,4 | 138 | 0,075 | 5,3 | 58 | 37 | 125 |
| 17 | 8,47 | 3,0 | 2,21 | 80 | 1,32 | 180 | 1,4 | 154 | 0,075 | 8,5 | 113 | 58 | 105 |
| 18 | 8,47 | 3,0 | 2,21 | 80 | 1,32 | 180 | 1,3 | 174 | 0,068 | 16,1 | 328 | 88 | 138 |
| 19 | 10,17 | 3,6 | 2,7 | 80 | 1,58 | 210 | 1,7 | 156 | 0,076 | 9,2 | 132 | 68 | 105 |
| 20 | 10,17 | 3,6 | 2,7 | 80 | 1,58 | 280 | 1,9 | 164 | 0,081 | 14,5 | 328 | 76 | 145 |
| 21 | 10,17 | 3,6 | 2,7 | 80 | 1,58 | 350 | 2,4 | 175 | 0,103 | 17,6 | 365 | 95 | 145 |
| 22 | 10,17 | 3,6 | 2,7 | 80 | 1,58 | 420 | 2,8 | 182 | 0,119 | 15,5 | 368 | 100 | 145 |

## Patentansprüche

1. Verfahren zur Extrusion einer homogenen Polymerzusammensetzung, die einen Gelierungsgrad von 60 bis 100%, eine Bruchdehnung von mindestens 200 % und eine Zugfestigkeit von mindestens 10 N/mm² aufweist, aus einem nicht compoundierten Polyvinylchlorid, **dadurch gekennzeichnet, dass** innerhalb des Verfahrens eine Energiemenge, angegeben durch den spezifischen Energieeintrag (SEI), von 0.03 bis 0.20 kWh/kg, insbesondere 0.04 bis 0.16 kWh/kg in die Polymerzusammensetzung eingetragen wird, wobei die Polymerzusamsetzung besteht aus
(A) 30 bis 80 Gew.-% durch Suspensionpolymerisation hergestelltes Polyvinylchlorid,
(B) 0,5 - 5 Gew.-% eines stabilisierenden Additivs,
(C) 0 - 40 Gew.-% eines festen Bestandteils, und
(D) 5 - 40 Gew.-% eines bei Raumtemperatur flüssigen Weichmachers für das Polyvinylchlorid,
wobei sich die Angaben in Gew.-% jeweils auf das Gesamtgewicht der Polymerzusammensetzung beziehen, mit einer Extrusionsvorrichtung mit mindestens einem Rotor, der mindestens drei Knet- und/oder Mischzonen aufweist und in der Lage ist, die Mischung sowohl zu transportierten als auch zu mischen, in die Polyvinylchlorid (A) in nicht compoundierter Form eingespeist wird, und
wobei das Verfahren die Schritte
(II) Einspeisen des Polyvinylchlorids (A) und von stabilisierendem Additiv (B) in die Extrusionsvorrichtung durch einen ersten Einlass, der in der Nähe der Antriebseinheit und neben einem ersten fördernden Segmentabschnitt des mindestens einen Rotors angeordnet ist;
(III) Einspeisen des Weichmachers zum mit dem stabilisierenden Additiv vermischten Polyvinylchlorid durch mindestens zwei voneinander beabstandete Einlasse, wobei der Weichmacher in mindestens zwei Portionen von jeweils 30-70 Gew-%, bezogen auf das Gesamtgewicht des Weichmachers, zum Polyvinylchlorid zugegeben wird, und zwischen der Zugabe der einzelnen Portionen eine Knet- und/oder Mischzone angeordnet ist,
(IV) Bearbeiten des Weichmacher/Polyvinylchlorid Gemischs bei einer Temperatur bei oder oberhalb der Glasübergangstemperatur des Polyvinylchlorids, wobei die Temperatur des Gemischs 150°C nicht übersteigt bis der Weichmacher im Wesentlichen vollständig in das Polyvinylchlorid eingearbeitet wurde.
(V) gegebenenfalls Einspeisen des festen Bestandteils zum mit dem Weichmacher vermischten Polyvinylchlorid in einem Abschnitt, an dem mindestens 80 Gew.-% der Gesamtmenge des Weichmachers in das Polyvinylchlorid eingearbeitet wurden,
(VI) gegebenenfalls Entgasen und Extrudieren der Mischung durch die Extrusionsdüse,
umfasst.

2. Verfahren gemäß Anspruch 1, **dadurch gekennzeichnet, dass** es sich beim dem nicht-compoundierten Polyvinylchlorid um durch Suspensionspolymerisation hergestelltes Polyvinylchlorid handelt.

3. Verfahren gemäß Anspruch 1 oder 2, **dadurch gekennzeichnet, dass** die zur Extrusion verwendete Extrusionsvorrichtung ein Paar von im Wesentlichen isomorphen, länglichen Rotoren, die in den Hohlraum passen und zur interpenetrierenden Bewegung nebeneinander angeordnet sind, aufweist.

4. Verfahren gemäß Anspruch 3, **dadurch gekennzeichnet, dass** jeder der Rotoren ein Länge L im Bereich des 32 - 60-fachen seines Durchmessers D aufweist.

5. Verfahren gemäß Anspruch 3 oder 4, **dadurch gekennzeichnet, dass** dem Polyvinylchlorid eine erste Portion Weichmacher bei einem L/D-Verhältnis im Bereich von 1 bis 8 und eine zweite Portion Weichmacher bei einem L/D-Verhältnis von 10 bis 20 zugegeben wird.

6. Verfahren gemäßAnspruch 1 oder 2, **dadurch gekennzeichnet, dass** als Extrusionsvorrichtung ein Planetenwalzenextruder, ein Ring-Extruder, ein Mehrwellenextruder oder ein Buss-Kneter verwendet wird.

7. Verfahren gemäß einem der Ansprüche 1 bis 6, **dadurch gekennzeichnet, dass** der feste Bestandteilzum mit dem Weichmacher vermischten Polyvinylchlorid in einem Abschnitt zugegeben wird, an dem mindestens 95 Gew.-%, bevorzugt mindestens 99 Gew.-% des Weichmachers in das Polyvinylchlorid eingeknetet wurden.

8. Verfahren gemäß einem der Ansprüche 1 bis 7, **dadurch gekennzeichnet, dass** dem Polyvinylchlorid im Schritt (V) mindestens 80 Gew.-%, bevorzugt mindestens 95 Gew.-%, und besonders bevorzugt mindestens 99 Gew.-% der Gesamtmenge des festen Bestandteils zugegeben werden.

9. Verfahren gemäß einem der Ansprüche 1 bis 8, **dadurch gekennzeichnet, dass** die Mischung aus Weichmacher und PVC auf eine Temperatur von mindestens 30°C unterhalb der Glasübergangstemperatur (Tg) des Polyvinylchlorids, bevorzugt 15°C unterhalb der Tg des PVC's und besonders bevorzugt oberhalb der Tg des Polyvinylchlorids eingestellt wird.

10. Verfahren gemäß einem der Ansprüche 1 bis 9, **dadurch gekennzeichnet, dass** die einzelnen Portionen für das Einspeisen des Weichmachers zum mit dem stabilisierenden Additiv vermischten Polyvinylchlorid im Schritt (III)40 bis 60 Gew.-%, bezogen auf das Gesamtgewicht des Weichmachers, ausmachen.

11. Verfahren gemäß Anspruch 10, **dadurch gekennzeichnet, dass** der Weichmacher in zwei Portionen zum Polyvinylchlorid zugegeben wird, wobei die zuerst zugegebene Portion 55 ± 3 Gew.-% und die danach zugegebene Portion 45 ± 3 Gew.-% der Gesamtmenge des Weichmachers ausmacht.

12. Verfahren gemäß einem der Ansprüche 1 bis 11, **dadurch gekennzeichnet, dass** der Gehalt des festen Bestandteils in der Polymerzusammensetzung 0,01 bis 35 Gew.-%, bevorzugt 0,3 bis 30 Gew.-% beträgt.

13. Verfahren gemäß einem der Ansprüche 1 bis 12, **dadurch gekennzeichnet, dass** der feste Bestandteil erst in das Polyvinylchlorid eingearbeitet wird, nachdem der Weichmacher im Wesentlichen vollständig in das Polyvinylchlorid eingearbeitet wurde.

14. Verfahren gemäß einem der vorstehenden Ansprüche, **dadurch gekennzeichnet, dass** die durch die Extrusionsvorrichtung eingebrachte Energiemenge sowohl in Form von mechanischer Energie als auch im Form von thermischer Energie, insbesondere durch Heizelemente, eingetragen werden kann und dass am Ende der Extrusionsvorrichtung eine Produkttemperatur von mindestens 150°C bis maximal 195°C, bevorzugt 155°C bis 190°C und besonders bevorzugt 160 bis 185°C erreicht wird.

15. Verfahren gemäß einem der vorstehenden Ansprüche, **dadurch gekennzeichnet, dass** die homogene Polymerzusammensetzung eine thermische Reststabilität, bestimmt gemäß DIN 53 381-1 bei 180 °C, von mindestens 60 Minuten, bevorzugt mindestens 90 Minuten und besonders bevorzugt mindestens 100 Minuten aufweist.

## Claims

1. Method for extruding a homogeneous polymer composition, which has a degree of gelation of 60% to 100%, an elongation at break of at least 200%, and a tensile strength of at least 10 N/mm², from an uncompounded polyvinyl chloride, **characterized in that** the quantity of energy introduced into the polymer composition within the method, as indicated by the specific energy input (SEI), is 0.03 to 0.20 kWh/kg, more particularly 0.04 to 0.16 kWh/kg, the polymer composition consisting of
(A) 30 to 80 wt% of polyvinyl chloride prepared by suspension polymerization,
(B) 0.5 - 5 wt% of a stabilizing additive,
(C) 0 - 40 wt% of a solid constituent, and
(D) 5 - 40 wt% of a plasticizer, liquid at room temperature, for the polyvinyl chloride,
where the figures in wt% are based in each case on the total weight of the polymer composition, with an extrusion apparatus having at least one rotor, which has at least three kneading and/or mixing zones and is capable of both transporting and mixing the mixture, into which polyvinyl chloride (A) is fed in uncompounded form, and
where the method comprises the steps of
(II) feeding the polyvinyl chloride (A) and stabilizing additive (B) into the extrusion apparatus through a first inlet, which is disposed in the vicinity of the drive unit and adjacent to a first conveying segment section of the at least one rotor;
(III) feeding the plasticizer to the polyvinyl chloride mixed with the stabilizing additive through at least two inlets at a distance from one another, the plasticizer being added in at least two portions each of about 30-70 %, based on the total weight of the plasticizer, to the polyvinyl chloride, there being a kneading and/or mixing zone disposed between the addition of the individual portions,
(IV) working the plasticizer/polyvinyl chloride mixture at a temperature of or above the glass transition temperature of the polyvinyl chloride, the temperature of the mixture not exceeding 150°C, until the plasticizer has been incorporated substantially completely into the polyvinyl chloride,
(V) optionally feeding the solid constituent to the polyvinyl chloride mixed with the plasticizer in a section at which at least 80 wt% of the total amount of the plasticizer has been incorporated into the polyvinyl chloride,
(VI) optionally devolatilizing and extruding the mixture through the extrusion die.

2. Method according to Claim 1, **characterized in that** the uncompounded polyvinyl chloride is polyvinyl chloride prepared by suspension polymerization.

3. Method according to Claim 1 or 2, **characterized in that** the extrusion apparatus used for the extrusion comprises a pair of substantially isomorphous, elongate rotors which fit into the cavity and are disposed next to one another for interpenetrating movement.

4. Method according to Claim 3, **characterized in that** each of the rotors has a length L in the range of 32 - 60 times its diameter D.

5. Method according to Claim 3 or 4, **characterized in that** the polyvinyl chloride is admixed with a first portion of plasticizer at an L/D ratio in the range from 1 to 8 and with a second portion of plasticizer at an L/D ratio of 10 to 20.

6. Method according to Claim 1 or 2, **characterized in that** said extrusion apparatus is a planetary roller extruder, an annular extruder, a multiscrew extruder or a Buss kneader.

7. Method according to any of Claims 1 to 6, **characterized in that** the solid constituent, more particularly the mineral filler, is added to the polyvinyl chloride, mixed with the plasticizer, in a section at which at least 95 wt%, preferably at least 99 wt%, of the plasticizer has been kneaded into the polyvinyl chloride.

8. Method according to any of Claims 1 to 7, **characterized in that** the polyvinyl chloride is admixed in step (V) with at least 80 wt%, preferably at least 95 wt%, and more preferably at least 99 wt% of the total amount of the solid constituent.

9. Method according to any of Claims 1 to 8, **characterized in that** the mixture of plasticizer and PVC is brought to a temperature of at least 30°C below the glass transition temperature (Tg) of the polyvinyl chloride, preferably 15°C below the Tg of the PVC, and more preferably above the Tg of the polyvinyl chloride.

10. Method according to any of Claims 1 to 9, **characterized in that** the individual portions for the feeding of the plasticizer to the polyvinyl chloride, mixed with the stabilizing additive, in step (III) account for about 40 to 60 wt%, based on the total weight of the plasticizer.

11. Method according to Claim 10, **characterized in that** the plasticizer is added in two portions to the polyvinyl chloride, with the portion added first making up 55 ± 3 wt% and the portion added thereafter 45 ± 3 wt% of the total amount of the plasticizer.

12. Method according to any of Claims 1 to 11, **characterized in that** the amount of the solid constituent in the polymer composition is 0.01 to 35 wt%, preferably 0.3 to 30 wt%.

13. Method according to any of Claims 1 to 12, **characterized in that** the solid constituent is incorporated into the polyvinyl chloride only after the plasticizer has been incorporated substantially completely into the polyvinyl chloride.

14. Method according to any of the preceding claims, **characterized in that** the amount of energy introduced by the extrusion apparatus may be introduced both in the form of mechanical energy and in the form of thermal energy, more particularly by means of heating elements, and that at the end of the extrusion apparatus a product temperature is reached of at least 150°C up to at most 195°C, preferably 155°C to 190°C and more preferably 160 to 185°C.

15. Method according to any of the preceding claims, **characterized in that** the homogeneous polymer composition has a residual thermal stability, determined according to DIN 53 381-1 at 180°C, of at least 60 minutes, preferably at least 90 minutes, and more preferably at least 100 minutes.

## Revendications

1. Procédé d'extrusion d'une composition polymère homogène, qui présente un degré de gélification de 60 à 100 %, un allongement à la rupture d'au moins 200 % et une résistance à la traction d'au moins 10 N/mm², à partir d'un polychlorure de vinyle non mélangé, **caractérisé en ce que**, pendant le procédé, une quantité d'énergie, indiquée par l'apport d'énergie spécifique (SEI), de 0,03 à 0,20 kWh/kg, notamment de 0,04 à 0,16 kWh/kg, est introduite dans la composition polymère, la composition polymère étant constituée par :
(A) 30 à 80 % en poids de polychlorure de vinyle fabriqué par polymérisation en suspension,
(B) 0,5 à 5 % en poids d'un additif stabilisant,
(C) 0 à 40 % en poids d'un constituant solide et
(D) 5 à 40 % en poids d'un plastifiant liquide à température ambiante pour le polychlorure de vinyle,
les indications en % en poids se rapportant à chaque fois au poids total de la composition polymère, avec un dispositif d'extrusion comprenant au moins un rotor, qui comprend au moins trois zones de malaxage et/ou de mélange et qui est en mesure aussi bien de transporter que de mélanger le mélange, dans lequel le polychlorure de vinyle (A) est introduit sous forme non mélangée, et le procédé comprenant les étapes suivantes :
(II) l'introduction du polychlorure de vinyle (A) et de l'additif stabilisant (B) dans le dispositif d'extrusion par une première entrée, qui est agencée à proximité de l'unité d'entraînement et à côté d'une première partie de segment de transport dudit au moins un rotor ;
(III) l'ajout du plastifiant au polychlorure de vinyle mélangé avec l'additif stabilisant par au moins deux entrées espacées l'une de l'autre, le plastifiant étant ajouté au polychlorure de vinyle en au moins deux portions chacune de 30 à 70 % en poids, par rapport au poids total du plastifiant, et une zone de malaxage et/ou de mélange étant agencée entre l'ajout des portions individuelles,
(IV) le traitement du mélange plastifiant/polychlorure de vinyle à une température supérieure ou égale à la température de transition vitreuse du polychlorure de vinyle, la température du mélange ne dépassant pas 150 °C jusqu'à ce que le plastifiant ait été essentiellement entièrement incorporé dans le polychlorure de vinyle,
(V) éventuellement l'ajout du constituant solide au polychlorure de vinyle mélangé avec le plastifiant dans une partie dans laquelle au moins 80 % en poids de la quantité totale du plastifiant a été incorporée dans le polychlorure de vinyle,
(VI) éventuellement le dégazage et l'extrusion du mélange par la buse d'extrusion.

2. Procédé selon la revendication 1, **caractérisé en ce que** le polychlorure de vinyle non mélangé est un polychlorure de vinyle fabriqué par polymérisation en suspension.

3. Procédé selon la revendication 1 ou 2, **caractérisé en ce que** le dispositif d'extrusion utilisé pour l'extrusion comprend une paire de rotors oblongs essentiellement isomorphes, qui traversent la cavité et sont agencés l'un à côté de l'autre pour le mouvement interpénétrant.

4. Procédé selon la revendication 3, **caractérisé en ce que** chacun des rotors présente une longueur L dans la plage allant de 32 à 60 fois son diamètre D.

5. Procédé selon la revendication 3 ou 4, **caractérisé en ce qu'**une première partie du plastifiant est ajoutée au polychlorure de vinyle à un rapport L/D dans la plage allant de 1 à 8 et une deuxième partie du plastifiant à un rapport L/D de 10 à 20.

6. Procédé selon la revendication 1 ou 2, **caractérisé en ce qu'**une extrudeuse à cylindres planétaires, une extrudeuse à anneaux, une extrudeuse à plusieurs arbres ou un malaxeur Buss est utilisé en tant que dispositif d'extrusion.

7. Procédé selon l'une quelconque des revendications 1 à 6, **caractérisé en ce que** le constituant solide est ajouté au polychlorure de vinyle mélangé avec le plastifiant dans une partie dans laquelle au moins 95 % en poids, de préférence au moins 99 % en poids du plastifiant a été incorporé dans le polychlorure de vinyle.

8. Procédé selon l'une quelconque des revendications 1 à 7, **caractérisé en ce qu'**au moins 80 % en poids, de préférence au moins 95 % en poids et de manière particulièrement préférée au moins 99 % en poids de la quantité totale du constituant solide est ajoutée au polychlorure de vinyle à l'étape (V).

9. Procédé selon l'une quelconque des revendications 1 à 8, **caractérisé en ce que** le mélange de plastifiant et de PVC est ajusté à une température au moins 30 °C en dessous de la température de transition vitreuse (Tg) du polychlorure de vinyle, de préférence 15 °C en dessous de la Tg du PVC et de manière particulièrement préféré au-dessus de la Tg du polychlorure de vinyle.

10. Procédé selon l'une quelconque des revendications 1 à 9, **caractérisé en ce que** les parties individuelles pour l'ajout du plastifiant au polychlorure de vinyle mélangé avec l'additif stabilisant à l'étape (III) sont de 40 à 60 % en poids, par rapport au poids total du plastifiant.

11. Procédé selon la revendication 10, **caractérisé en ce que** le plastifiant est ajouté en deux portions au polychlorure de vinyle, la portion ajoutée en premier étant de 55 ± 3 % en poids et la portion ajoutée ensuite étant de 45 ± 3 % en poids de la quantité totale du plastifiant.

12. Procédé selon l'une quelconque des revendications 1 à 11, **caractérisé en ce que** la teneur du constituant solide dans la composition polymère est de 0,01 à 35 % en poids, de préférence de 0,3 à 30 % en poids.

13. Procédé selon l'une quelconque des revendications 1 à 12, **caractérisé en ce que** le constituant solide n'est incorporé dans le polychlorure de vinyle qu'après que le plastifiant ait été essentiellement entièrement incorporé dans le polychlorure de vinyle.

14. Procédé selon l'une quelconque des revendications précédentes, **caractérisé en ce que** la quantité d'énergie introduite par le dispositif d'extrusion peut être introduite aussi bien sous la forme d'énergie mécanique que sous la forme d'énergie thermique, notamment par des éléments chauffants, et **en ce qu'**une température de produit d'au moins 150 °C à au plus 195 °C, de préférence de 155 °C à 190 °C, et de manière particulièrement préférée de 160 à 185 °C, est atteinte à la fin du dispositif d'extrusion.

15. Procédé selon l'une quelconque des revendications précédentes, **caractérisé en ce que** la composition polymère homogène présente une stabilité thermique résiduelle, déterminée selon DIN 53 381-1 à 180 °C, d'au moins 60 minutes, de préférence d'au moins 90 minutes et de manière particulièrement préférée d'au moins 100 minutes.
